# EUROPEAN PATENT APPLICATION

(11) **EP 1 360 908 A2**
(43) Date of publication of application: **12.11.2003**
(21) Application number: 03252794.7
(22) Date of filing: 02.05.2003
(51) Int. Cl.: A23N 7/02, A23N 7/00

(54) **Method and apparatus for peeling citrus fruit**

(30) Priority: 10.05.2002 GB 0210752
(71) Applicant: Grewal, Simon Surinder Pal, Ilford, Essex IG2 6EP (GB)
(72) Inventor: Grewal, Simon Surinder Pal, Ilford, Essex IG2 6EP (GB)
(74) Representative: Lamb, Martin John Carstairs

(57) **Abstract**

In order to provide an improved method for preparing citrus fruit, the method comprising the steps of:
a) providing a citrus fruit having a flesh portion, an albedo portion, a peel portion and a longitudinal axis;
b) scoring the peel portion to provide access to the albedo portion without piercing the flesh portion;
c) submerging the fruit in a liquid under vacuum to extract air from the albedo portion;
d) subjecting the fruits submerged in the liquid to pressure to produce infused fruits, in which the peel portion and the albedo portion are loosened from the fruit portion;
e) removing the peel portion and the albedo portion from the fruit portion to produce peeled fruits;
f) preparing the fruit portion for consumption and storage;
wherein in the step (c) or step (d) or both, the liquid comprises pectinase.

The cutting may be carried out by a cutter (200) comprising a plurality of cutting means (203) in succession, each cutting means (203) comprising first and second movable surfaces movable in opposite directions, supporting and rotating between them the citrus fruit (151,152,153), and an array of cutter knives (203) biased towards the first and second movable surfaces for cutting a plurality of latitudinal slits through the peel portion into the albedo portion of a citrus fruit (151,152,153) and a depth control means for preventing the cutter knives piercing the fruit portion;
the second movable surface being displacable away from the first surface so that a citrus fruit (151,152,153) carried on the first movable surface can be released and passed to the next cutting means (203) in succession or out of the cutter (200).

## Description

This invention relates to a method and apparatus for peeling citrus fruit and in particular for producing skinned segments.

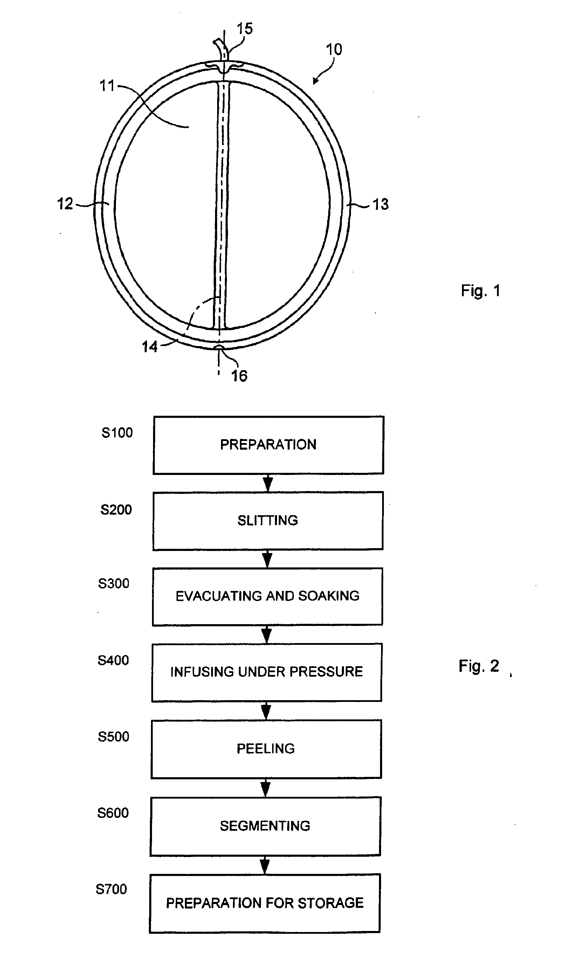

A vertical cross section of a citrus fruit is shown in Figure 1 where a citrus fruit 10 has a fruit portion divided into segments 11 surrounded by a spongy layer, the pith or albedo 12, which is itself is surrounded by a thin waxy outer layer, the peel or cuticle 13. The segments are covered by a segment membrane. A citrus fruit is typically more or less spheroid having a longitudinal axis 14 passing through a stem end 15 and a blossom end 16. The albedo is mostly composed of pectin, cellulose and hemi-cellulose with numerous air sacs. An average grapefruit may contain up to 200 ml of air in these air sacs.

It is well known in the art to use enzymes to assist in the removal of the peel and albedo from the fruit portion of a citrus fruit, the enzymes being used to at least partially digest the pectin and cellulose and thereby loosen the peel.

Thus it is known from US-A-4284651 to produce segments from citrus fruits using an enzyme. The fruit is first heated so that the core is at 20° to 40°C and the surface at 40° to 60°C, which takes 10 to 60 minutes. The peel is scored to barely penetrate the albedo and the fruit submerged in pectinase under a vacuum of 25 to 30ins of mercury (85 to 102kPa) at a temperature of 20° to 50°C to remove air from the air sacs in the albedo. Pectinase then enters the air sacs when the vacuum is released. It may be necessary to repeat the process to remove sufficient of the air. The fruit is then incubated for 15 minutes to 2 hours at a temperature of 30° to 60°C in an oven, in order for the enzyme to dissolve some of the pectin and cellulose in the albedo and loosen the peel. The fruit can then be mechanically peeled and segmented by "hand, scoop, section knives" from the core.

US-A-5000967 discloses an alternative use of enzymes in which lower temperature are used and the enzyme is infused into the albedo using raised pressures without the use of a vacuum to extract the air. Thus, the core and surface of the fruit are maintained at below 40°C and the peel is scored into wedges, rings, spirals or is grated or scratched. The fruit is submerged in an enzyme at room temperature and 60 to 10 pressure pulses of 20 to 40 p.s.i (180 to 276 kPa) are applied for 15 seconds with breaks between the pulses of 5 seconds. The fruit is incubated at less than 30°C for 1 to 2 hours. This process is said to provide improved ease of peeling and less adhering albedo than in the vacuum infusion method with more segments being removed. It is supposed that the pulse pressure tends to flex the peel to work the enzyme solution through the albedo. This process has the advantage over the earlier process that because the enzyme is maintained at about room temperature, the enzyme can be reused for 9 to 10 batches, whereas in the previous process the effectiveness of the enzyme was destroyed after one use by the higher temperatures.

Methods of peeling whole citrus fruits, rather than producing segments, are known from US-A-5196222 and US-A-5200217.

US-A-5196222 discloses a process in which the peel of the fruit is first perforated to allow the enzymes to access the albedo then the fruit is orientated so that it rotates on the longitudinal axis 14 through the stem so that a single equatorial cut can be made through the peel by knives urged towards the fruit. The fruit is then infused with a fluid beneath the outer surface, using either a vacuum or pressure method and incubated at less than 20°C for 10 to 16 minutes. The fruit is then peeled manually, although the disclosure speculates that peeling could be automated, and the fruit is brushed to remove the strings of cellulose before being cooled and packaged.

In US-A-5200217, the fruit is first chilled below 10°C and preferably to 5° to 8°C so that the enzyme will not affect the fruit portion in the subsequent infusion. The fruit is infused with the enzyme at 35°C either using a vacuum of 25 to 30 inches of mercury (85 to 120 kPa) or using pressure pulses of 20 to 40 psi (180 to 276 kPa), using 15 second pulses with 5 second gaps between the pulses. The fruit then has to be incubated for 20 to 90 minutes depending on the time within the harvesting season and it is stated that in this time there is insufficient time for the core to warm and therefore for the enzyme to affect the fruit portion to any large extent.

The use of enzymes, therefore, normally requires the raising of the temperature of the fruit and long incubation times. The raised temperatures tend to destroy vitamin C and flavonoids in the fruit and the enzymes require long incubations periods in order partially to dissolve the albedo to loosen the fruit. Special precautions have to be taken to mitigate enzyme attack on the fruit portion. Moreover, manual peeling and, where required, segmenting of the fruit, are normally required as part of the process.

US-A-5560951 discloses a non-enzymatic method of peeling a citrus fruit. In this process, the fruit is washed and held for 30 minutes at 25° to 45°C and scored with longitudinal cuts before being infused with water either under a vacuum of 3 kPa for 3 minutes which is slowly released over the succeeding 3 minutes, or is infused under pressure at 203 kPa using compressed air in which 10 pulses of 15 seconds are applied to the fruit. Subsequent to infusion, it is disclosed that there is no advantage in incubating the fruit which has been infused with water as there is with fruit infused with enzymes. The fruit is then peeled by hand. It is disclosed that peeling time is actually longer for grapefruit using water infusion than for enzyme infusion but comparable with the peeling times using enzymes for oranges and tangelos. It is further disclosed that there is less juice leakage and softening during storage with water infusion than with enzyme infusion, which may be due to enzyme penetrating into the fruit portions in the enzyme methods. Peeling of the water infused fruit was, however, hampered by incomplete hydration of the albedo, particularly in the pressure method. According to the disclosure, the segments did not become slimy with storage as is experienced using enzyme. Problems were disclosed of dry albedo using the lower temperature of the process, in particular with the low pressure infusion process and where there were substantial air spaces or slightly desiccated peels.

In WO 01/50891, a method and apparatus for peeling citrus fruit is provided, in which the citrus fruit is first of all submerged in liquid under a vacuum to extract air from the albedo portion and then subjected to pressure to loosen the peel portion in the albedo from the fruit portion. In particular, pressures in the range 400kPa to 20000 kPa are preferably used. This can lead to generally good removal of the albedo and peel from the fruit portion but the resulting skinned segments may still have a certain amount of albedo still attached, after treatment.

It is, apparent that the enzyme methods known in the art, require long processing times and may result in poor shelf life. The pressure or temperature infusion methods with water result in some problems with manual peeling because of sections of dry albedo. The pressure methods of the prior art require pressure pulsing.

It is an object of the present invention to at least partially alleviate the foregoing difficulties.

The present inventor has discovered that the method of WO01/50891 may be improved by adding a small amount of enzyme in the liquid during the vacuum step, the pressurising step, or both of them. The resulting fruit portion can be peeled and cleaned to provide excellent, clean fruit segments.

Accordingly, in a first aspect, the present invention provides a method for preparing citrus fruit including the steps of:
a) providing a citrus fruit having a flesh portion, an albedo portion, a peel portion and a longitudinal axis;
b) scoring the peel portion to provide access to the albedo portion without piercing the flesh portion;
c) submerging the fruit in a liquid under a vacuum to extract air from the albedo portion;
d) subjecting the fruit submerged in the liquid to pressure to produce infused fruit, in which the peel portion and the albedo portion are loosened from the fruit portion;
e) removing the peel portion and the albedo portion from the fruit portion to produce peeled fruit,
f) preparing the fruit portion for consumption and storage,
wherein, in the step (c) or step (d), or both, the liquid comprises an enzyme.

The enzyme employed is suitably pectinase. Suitably, the liquid employed in step (c) and/or step (d) is an aqueous solution of pectinase. Suitably, the aqueous solution of pectinase comprises between 0.5 and 2% by weight of pectinase, more preferably 1-1.5% by weight.

Conveniently, the step (a) of providing a citrus fruit includes washing the fruit.

Advantageously, the washing step includes the steps of wetting the peel portion with water and detergent, and brushing the peel portion and rinsing the peel portion with water. The fruit may additionally be sterilised, for example using chlorine or ozone, in a conventional manner.

Conveniently, the step (a) of providing a fruit includes a step of grading the fruit by size.

Conveniently, the step (b) of piercing the peel portion to provide access to the albedo portion includes cutting through the peel portion into the albedo portion to produce slit fruit so as to facilitate subsequent removal of the peel and albedo portions from the fruit portion of the slit fruit.

Advantageously, the step of cutting through the peel portion comprises cutting the peel portion with latitudinal cuts. Preferably, at least, two, more preferably at least three cutting operations are performed to provide at least two, more preferably at least three intersecting sets of latitudinal cuts. A method and apparatus for achieving this will be described later below.

The steps (a) and (b) may each be carried out in continuously operating apparatus.

Conveniently, the step (c) of submerging the fruit in a fluid under vacuum comprises submerging the fruit under water in a vacuum in the range 40 to 100 kPa below atmospheric pressure, more preferably 51 to 100 kPa below atmospheric pressure.

Preferably, the fruit is submerged under vacuum for a period for a time in the range 10 seconds - 2 minutes, more preferably 30 seconds - 1.5 minutes.

The fruit may be submerged under vacuum in two steps. In a first step, the fruit is submerged under water under a vacuum in the range 40 - 70, more preferably 40-60 kPA below atmospheric pressure. This first step suitably last for a period in the range 10 - 60 seconds, more preferably 20 - 40 seconds. After the first step, the fruit is maintained in the fluid under vacuum under further reduced pressure, preferably in the range 70-100 kPa below atmospheric pressure. In the second step, the fruit may be maintained under vacuum for 30 seconds - 2 minutes, preferably 40 seconds to 1 minute.

Preferably, the step (c) further includes the step of releasing the vacuum over a period of time in the range 20-60 seconds, more preferably 25-35 seconds. It is found to give better separation if vacuum is released slowly.

Suitably, during the step (c), the fruit is maintained at ambient temperature, or at a temperature in the range 15 - 25°C.

There may be a further incubating step between steps (c) and (d) in which the fruit is maintained in water at ambient pressure and temperature for a period in the range 10 - 30 minutes, more preferably 15 - 20 minutes.

Conveniently, the step (d) of subjecting the fruit submerged in the fluid to pressure comprises subjecting the fruit to a pressure in the range 400 - 20,000 kPa, more preferably about 4,000 kPa.

Suitably, the step (d) of subjecting the fruit to pressure is carried out at ambient temperature or at a temperature in the range 15 - 25°C.

It is found that, during the vacuum step, the optional incubating step and the pressurising step (d), the fruit suitably increases in weight by 33%. The fruit suitably increases in volume by 7 - 12%. Without wishing to be bound by theory, it is believed that this is due to replacement of the air in the sacs by water and swelling of the sacs under the influence of pressure.

The step (c), the optional incubating step and the pressurising step (d) may be carried out batchwise. They may all be carried out in the same vessel or they may be carried out in separate vessels in succession.

Apparatus for carrying out the step (c) according to the present invention preferably comprises an evacuation and pressure vessel; a vacuum reservoir connectable to the evacuation and pressure vessel to rapidly partially evacuate the evacuation and pressure vessel, the vacuum reservoir being evacuable by a vacuum pump connectable thereto; a pressure pump connectable to the evacuation and pressure vessel for filling the evacuation and pressure vessel with a liquid under pressure; and pressure release means for permitting the liquid in the evacuation and pressure vessel to be returned to atmospheric pressure.

A process and apparatus for moving the peel portion and the albedo portion from the fruit portion will be described further below.

Conveniently, the step (f) of preparing the fruit portion for consumption or storage includes segmenting the fruit portion into segments.

A suitable method and apparatus for segmenting the fruit portion into segments will be described further below.

Conveniently, the step (f) of preparing the fruit portion for consumption or storage comprises the further step of treating the segments with acid.

It is found that the step of treating the segments with acid effectively deactivates any remaining enzyme so that further degradation of the fruit does not occur. The step of treating the segments with acid may be included in order to remove outer membranes from the segments.

Advantageously, the further step of removing outer membranes from the segments with acid comprises removing the outer membranes with dilute citric acid and/or dilute hydrochloric acid.

Preferably, the step of removing the outer membranes with dilute citric acid and/or dilute hydrochloric acid comprises passing the segments for 1 - 3 minutes through a bath containing a solution in the proportions of 1 gm of citric acid: 100 - 200 ml of water: 5 ml dilute hydrochloric acid, the solution having a pH in the range 0.88 to 0.91. The temperature range is suitably 30-60 °C

Conveniently, the step of removing the membranes with acid comprises the further steps of draining acid from the segments and neutralising any of the acid by immersing the segments in an alkaline solution.

Conveniently, the step of immersing the segments in an alkaline solution includes the step of dissolving any remaining segment membrane in the alkaline solution.

Conveniently, the alkali solution used in the alkali bath, used in the method described above, is obtainable by dissolving sodium hydroxide crystals in water in the proportion of 1 gm of sodium hydroxide crystals to 100 ml of water.

Preferably, the step of immersing the segments in an alkaline solution comprises immersing the segments in dilute sodium hydroxide at a temperature in the range 30°C to 60°C for 1 - 3 minutes.

Preferably, the step (f) of preparing the fruit for consumption or storage includes agitating and rinsing the segments in cold water.

Advantageously, the step (f) of preparing the fruit for consumption or storage includes chilling the segments in cold water, drying the segments and coating the segments.

Conveniently, the step of chilling the segments in cold water comprises chilling the segments in water at a temperature in the range 0°C to 2°C.

Preferably, the step of coating the segments comprises coating the segments with ascorbic acid 0.5% and/or citrus oil 0.5%.

The method and apparatus for forming cuts in the peel and albedo portion of the fruit may be substantially as described in WO 01/50891. However, it is found that a single set of latitudinal slits formed by that method may not be sufficient to allow penetration of enzyme to all parts of the albedo. The present inventor has realised that penetration may be improved by arranging a plurality of cutting means in succession, each cutting means comprising means for rotating the fruit, the means for rotating the fruit being movable to allow the fruit to move to the next cutting means in succession.

This arrangement is believed to be inventive in its own right. Accordingly, in the second aspect, the present invention provides a cutter for cutting into the albedo portion of a citrus fruit, comprising a plurality of cutting means in succession, each cutting means comprising:
first and second movable surfaces movable in opposite directions, for supporting and rotating between them a citrus fruit,
an array of cutter knives biassed towards the first and second movable surfaces for cutting a plurality of latitudinal slits through the peel portion to the albedo portion of a citrus fruit, and depth control means for preventing the cutter knives piercing the fruit portion,
the second movable surface being displaceable away from the first surface so that a citrus fruit carried on the first movable surface can be released and passed to the next cutting means in succession or out of the cutter.

The first and second movable surfaces may each comprise rotatable rollers or continuously movable belts. In a particularly preferred embodiment, the first movable surface comprises a moving belt for supporting on a horizontal surface thereof, a citrus fruit, the second movable surface comprising a rotatable roller located above the horizontal surface of the belt. It is further preferred that the first movable surface for each of the plurality of cutting means is provided by the same continuously movable belt extending through each of the cutting means, each cutting means comprising a second movable surface in the form of a roller above the belt. In this way, when the second movable surface is displaced away from the belt to release the citrus fruit, it is carried by the belt to the next cutting means in succession in a simple and easy manner.

Drive means may be provided for rotating the first movable surface and the second movable surface. Any suitable means may be provided for moving the second movable surface away from the first movable surface. For example, it may be mounted on an arm or on a piston. The second movable surfaces of the plurality of cutting means may be separately movable or they may be moved all at once by a common displacing apparatus.

Means may be provided between respective cutting means for rotating the citrus fruit about an axis different to the axis about which the fruit is rotated by the first and second movable surfaces. In this way, the citrus fruit is repositioned between respective cutting means to ensure that the sets of latitudinal slits formed by the plurality of cutting means cross one another at an angle.

Conveniently, the cutter knives each comprise an L-shaped blade holder having a first arm and a second arm shorter than the first arm, the first arm housing a protruding blade; the blade holder being pivotable about a pivot point adjacent a junction between the first arm and the second arm; and the cutter further comprising: pivot means passing through the pivot point; bias means acting on the second arm to bias the first arm towards the conveyor and rotator means; and stop means such that the blade holder is rotatable about the pivot point between a rest position in which the second arm abuts the stop means to limit downward rotation of the first arm and an upper position in which the first arm abuts the stop means to limit upward rotation of the first arm.

Advantageously, the depth control means comprises a shoulder between the blade holder and the blade for engaging an outer surface of the peel to allow the blade to penetrate only a pre-determined distance through the peel portion and into the albedo portion.

Water jets may be provided for spraying at least the knives and preferably also the movable surfaces, to act as a lubricant and to remove deposits left during the cutting operation.

The surface of the second movable surface may be configured to improve its frictional engagement with the citrus fruit. For example, it may be ridged or patterned. Preferably, a plurality of small protrusions or pins of lengths in the range 1-5 mm, preferably around 2 mm are provided for engaging the surface of the citrus fruit.

The step (e) of removing the peel portion and the albedo portion from the fruit portion preferably includes pressing the infused fruit by a predetermined amount to loosen the peel portion and the albedo portion from the fruit portion to produce pressed fruit. The step of pressing the infused fruit may be as described in WO 01/50891, in which the infused fruits are passed between brush rollers and contoured bars separated from the brush rollers by a distance 1 cm - 3 cm less than the diameter of the infused fruit, followed by an optional brushing step.

However, it has been found that the removal of peel and albedo from the fruit portion is not always achieved completely by this process, due to the gaps between the brushes of the brush rollers. The present inventor has realised that more effective removal of peel can be achieved by passing the fruit through a hole formed in a resilient material structure which will strip the peel off the sides of the fruit. This apparatus is believed to be inventive in its own right.

Accordingly, in a third aspect of the invention, there is provided a peeler for peeling the peel and albedo portion from the fruit portion of a citrus fruit, comprising at least one peeling means comprising a structure of resilient material having an aperture passing through the structure, and means for driving the fruit through the aperture.

Preferably, there are a plurality of peeling means in succession, to provide a peeling action in different directions. Means may be provided for rotating the fruit between each peeling means to ensure that it is fed in a different orientation to each respective peeling means. The means for rotating the fruit may simply comprise a chute extending from one peeling means to the next peeling means, along which the citrus fruit may roll. The sizes of the apertures of successive peeling means which are placed in succession may become gradually smaller to provide an increasing peeling effect.

Preferably, the fruit passed to the peeler has been graded before treatment so that the average size of the fruit passed to the peeler is a predetermined value, the size of the aperture in the peeling means being smaller than the predetermined average size by a value in the range 1 - 4 cm, preferably about 3 cm.

The resilient means may comprise a silicone rubber. It may be formed as a sheet. The sheet may be of a thickness in the range of 1 mm - 10 mm, more preferably 2 - 5 mm, and most preferably around 3 mm in thickness. It may be formed as a circular sheet with an annular hole in the middle. The sheet may be pierced to further reduce the stiffness of the peeling means. For example, a plurality of holes (suitably, circular holes) may be punched through the sheet of the peeling means.

Water sprays and air jets may be provided for lubricating and cleaning the surfaces of the peeler.

The means for driving the fruit through the aperture may comprise a piston for reciprocating movement through the aperture and back again. The piston may be operated electrically, mechanically or by compressed air or hydraulically.

Peel collecting means may be provided for removing peel removed from the citrus fruit. For example, means may be provided for blowing removed peel into a collecting means, for example a collecting chute. Optionally, a further peel removal means may be provided comprising a pair of contrarotating brushes defining a valley between them in which fruit may sit and be brushed. The fruit may sit in the valley for 1-3 minutes.

The segments of fruit portion may be loosened from one another by a segmenter as described in WO 01/50891, comprising two spaced apart rotatable drums defining a valley therebetween, delivering means for delivering peeled fruit to the valley for rotation by the drums therein, such that centripetal forces set up by rotation of the fruit by the drums cause the fruit to divide into segments.

However, it has been found difficult to balance the forces required to separate the segments with the forces liable to cause damage to the segments using this apparatus. The present inventor has realised that the segments of the fruit portion can be loosened from one another by a rolling and pressing operation.

It is believed that this is inventive in its own right, and in a fourth aspect, there is provided a segmenter for loosening the constituent segments of the fruit portion of a citrus fruit from one another, comprising:
means for rolling and pressing a citrus fruit, the rolling and pressing means being configured to apply a cyclically varying pressure to the citrus fruit.

It has been found that particularly good separation can be obtained if the fruit portion is chilled before passing it to the segmenter. Accordingly, the segmenter preferably further comprises cooling means for cooling a citrus fruit.

The chilling means may suitably comprise a liquid nitrogen tunnel in a manner known in the art. Preferably, the citrus fruit is chilled so that the temperature of the surface is in the range 0 to - 2°C, preferably - 1 to- 2°C and the temperature at the centre of the citrus fruit is in the range 0 to 5°C, preferably 1.5 to 3°C. The fruit portion may be chilled for a period in the range 10 minutes - 60 minutes, preferably 20-30 minutes, more preferably 20 minutes.

The rolling and pressing apparatus of the present invention may be used to loosen segments, final separation of the segments being achieved by another apparatus or by hand. If sufficient pressure is applied, the segments may be completely loosened from one another.

The coating for coating segments of citrus fruit, preferably comprises ascorbic acid 0.5% and citrus oil 0.5%.

A specific embodiment of the invention will now be described by way of example with reference to the accompanying drawings in which:
Figure 1 is a schematic cross section through a citrus fruit;
Figure 2 shows a flow diagram of the principal steps in the method of the invention;
Figure 3 is a flow diagram showing the method of Figure 2 in detail;
Figure 4 is a schematic view of an apparatus according to the present invention for peeling citrus fruit;
Figure 5 is a sketch side view of the cutter of Figure 4 in a first position;
Figure 6 is a sketch side view of the cuter of Figures 4 and 5 in a second position;
Figures 7 and 8 are views of the cutter sets of Figures 5 and 6, at a larger scale and in more detail.
Figures 9 and 10 show sketch sections through the apparatus of Figure 5;
Figure 11 is a schematic view of a citrus fruit after being scored in the apparatus of Figure 5;
Figure 12 is a schematic view of an infuser for use with the present invention;
Figures 13 and 14 show side and end views respectively of the fruit basket used in the infuser of Figure 12;
Figures 15 and 16 are sketch end views of the infuser of Figure 12 in the operating and unloading positions respectively;
Figure 17 is a schematic view of the peeler of Figure 4, in more detail;
Figure 18 is a schematic view of a peeler diaphragm of the peeler of Figure 17 at greater scale;
Figure 19 is a flowchart showing the operation of one peeling means of the peeler of Figure 17; and
Figure 20 is a schematic side view of the segmenter of Figure 4.

The method of the invention is shown in outline in Figure 2. Referring also to Figure 1, following preparation of the fruit in step S100, the peel 13 is scored or slit a number of times in step S200. The peel is scored through to the albedo 12 without piercing the segments 11. The fruit is then immersed in water and subjected to a vacuum in step S300. This leads to some of the air from the air sacs in the albedo 12 being removed. The water in which the fruit is immersed comprises a dilute solution of pectinase. The fruit is left under vacuum for a period of time. The vacuum is then released and water infuses in step S400 into the former air sacs and this is assisted by increasing the pressure of the water to 4000 kPa. At this pressure, the water may behave as a super solvent to dissolve the pectin and softens the albedo, cellulose and hemicellulose to such an extent that they can be subsequently removed by mechanical means. The pectinase assists in dissolving the pectin. Fruit is then peeled in step S500, segmented in step S600 and prepared for consumption or storage in S700.

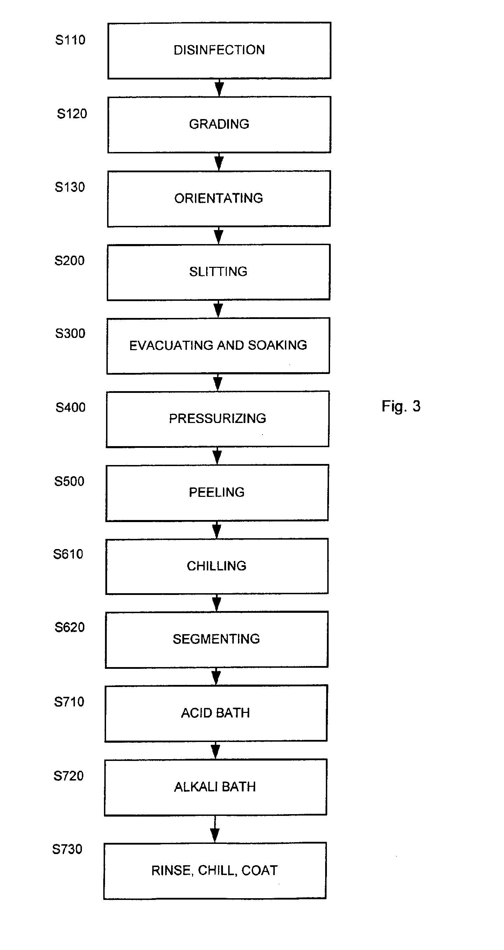

The process will be described in more detailed with reference to Figure 3.

The preparation S100 can be split into three primary operations. They are disinfection (S110), grading the fruit into grades with certain size ranges (S120) and orientating (S130). It is found that it is important to grade the citrus fruit accurately into at least three classes (small, medium, large) which are matched to the size and setting of various parts of the apparatus to be described later.

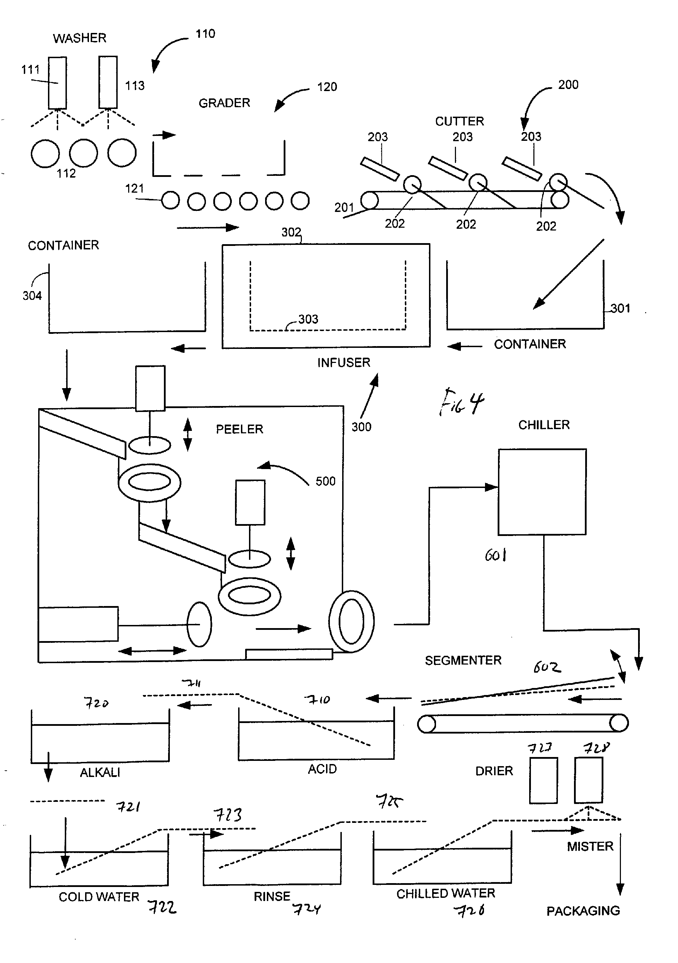

The slitting operation S200 will be described further below with reference to Figures 4 to 11.

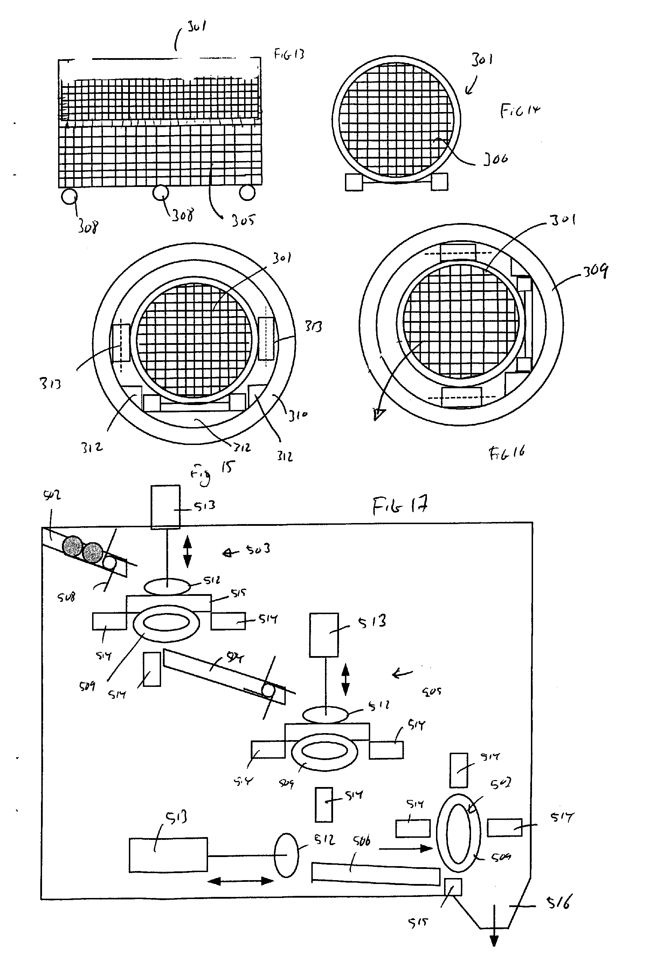

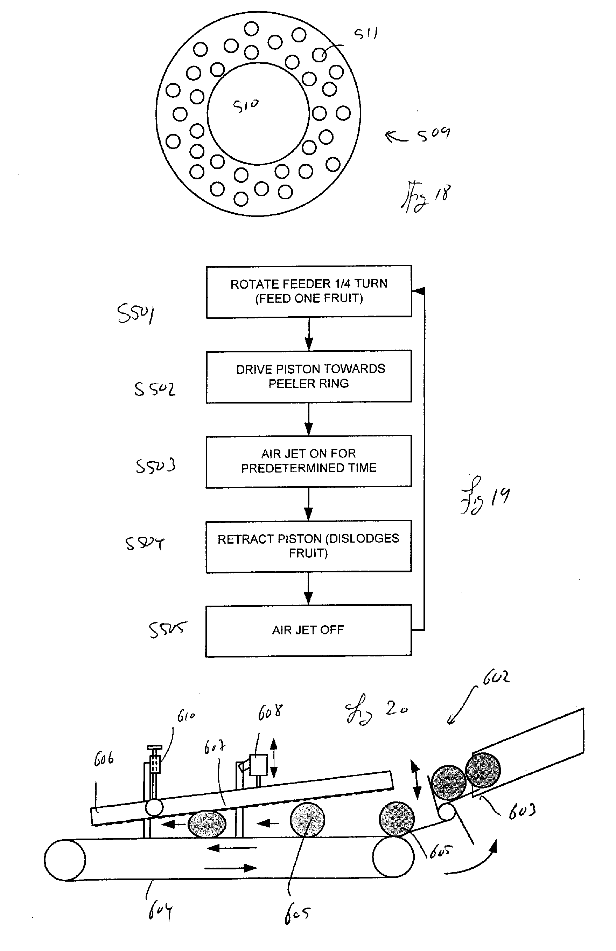

The evacuating and soaking step S300, and the pressurising step S400 will be described further below with reference to Figures 12 to 16. The peeling step S500 will be described further below with reference to Figures 17 to 19.

The segmenting step S600 comprises two separate operations. This first is chilling in step S610 and the second is segmenting in step S620 which will be described further below with reference to Figure 20.

The preparation of the citrus fruit for storage comprises three steps. The first step S710 comprises immersing the citrus fruit in an acid bath. This has two functions. The acid bath helps to remove any remaining albedo which still adheres to the segments. It is also found that the immersion in the acid bath helps to deactivate any enzyme which remains on the fruit after the treatment step. This prevents the enzyme becoming active during storage, which would leave to damage to the fruit segments.

After treatment in the acid bath in step S710, the citrus fruit is immersed in an alkali bath in step S720 to neutralise any remaining acid. Finally, in step S730, the citrus fruit is rinsed, chilled and coated as will be described further below with reference to Figure 4.

Figure 4 is a sketch view of an apparatus according to the invention.

Citrus fruit enters the apparatus at the top left hand corner of the page and leaves the apparatus at the bottom right hand corner.

Water jets 111 and revolving brushes 112 are provided to disinfect fruit 10 to be peeled, by thoroughly wetting the surface of the fruit with washer jets 111 and by brushing the outer surface of the peel with water and detergent as the fruit is moved over the revolving brushes 112 to remove field oils, soil, mould and dust. This is followed by a further set of water jets to provide a fresh water rinse.

A grader 120, known per se, is provided to grade the fruit by size to ensure that the fruit is processed by subsequent stages of the apparatus adjusted for the particular graded size of fruit. Thus, for example, one size of fruit may be passed through the remaining parts of the apparatus at a time or separate channels through the apparatus may be provided for different sizes of fruit. It is found in practice that grading into three sizes of fruit (small, medium, large) is sufficient. A conveyor 121 of known design is provided to pass the fruit from the grader 120 to a cutter or slitter 200. The cutter 200 will be described in detail further below, but comprises in outline a first moving surface 201 comprising a conveyor belt and a plurality of cutting stations. Each cutting station comprises a second moving surface 202 and a set of knives 203. Each cutting station cuts the citrus fruit about a different axes, leading to a plurality of intersecting scores. The scores pierce the peel portion of the fruit and extend into the albedo portion 12 without piercing the segments 11.

The cutter is shown in more detail in Figures 5 - 10.

Figure 5 shows a schematic side view of a cutter apparatus according to the present invention. Citrus fruit is fed in from the left-hand side and passed through the apparatus to the right-hand side. There are three cutter means, each comprising a cutter set 203 located above a first movable surface, which in all cases is defined by the upper face of the moving belt 201. Adjacent each cutter set 203 is a second movable surface, in the form of a roller 202. In use, a citrus fruit 151, 152, 153 will be held on top of the rolling belt 201. It will be prevented from moving forwards by the roller 202. The roller 202 is rotated in each case by a belt, so that the roller rotates in such a direction that the citrus fruit 151, 152, 153 is rotated by the combined action of the belt and roller. The cutter sets 203 are arranged such that they contact the peripheral surface of the citrus fruit, cutting through the peel into the albedo section in a manner which will be described further below.

Each roller 202 is mounted on the end of an arm 204. Each arm 204 is itself pivoted at its lower end 205 so that it is rotatable in an upward direction. The arms are rotated by a crank mechanism comprising cranks 206 and a connecting rod 207, the cranks and connecting rod being jointly operable by a cylinder 208 as will be described further below. Also visible in Figure 5 are guide rails 209 extending alongside the belt 201 to prevent the citrus fruit sliding off. Also visible is a chute 210 for feeding citrus fruit, with a feeder mechanism 211 comprising a paddle with four arms projecting therefrom. Upon rotation of the paddle by a quarter turn, a single citrus fruit may be fed. Figure 6 is a side view of the apparatus of figure 5 in which the cylinder 208 has been operated to draw up the crank mechanism 206 and thereby raise the arms 204 with the rollers 202 located at the ends to a height which will permit the citrus fruits 151, 152, 153 to be carried along by the belt 201. During this step, the paddle 211 is rotated by a quarter turn so that a further citrus fruit 150 is fed onto the belt 201. The citrus fruit 151 is allowed to pass underneath the roller 202. After this has happened, the roller 202 is lowered by the crank mechanism 206 so that the newly fed citrus fruit comes to rest against it, where it makes contact with the cutter set 203. The citrus fruit 151 released from the first roller is fed along the belt to the second roller, which has been returned to the blocking position. Whilst it is moving, the fruit will be contacted by depending brushes 230, rotated about a vertical axis by pneumatic motors. This will cause the citrus fruit to rotate about a vertical axis. In this way, the citrus fruit 151 is orientated in a different direction when it meets the next cutter set, so that the set of cuts formed by the second cutter set are at an angle to the first set of cuts. Once a citrus fruit has passed all three cutter sets, its will have on its surface, three sets of intersecting cuts at angles to one another, giving a very high level of cutting to the surface.

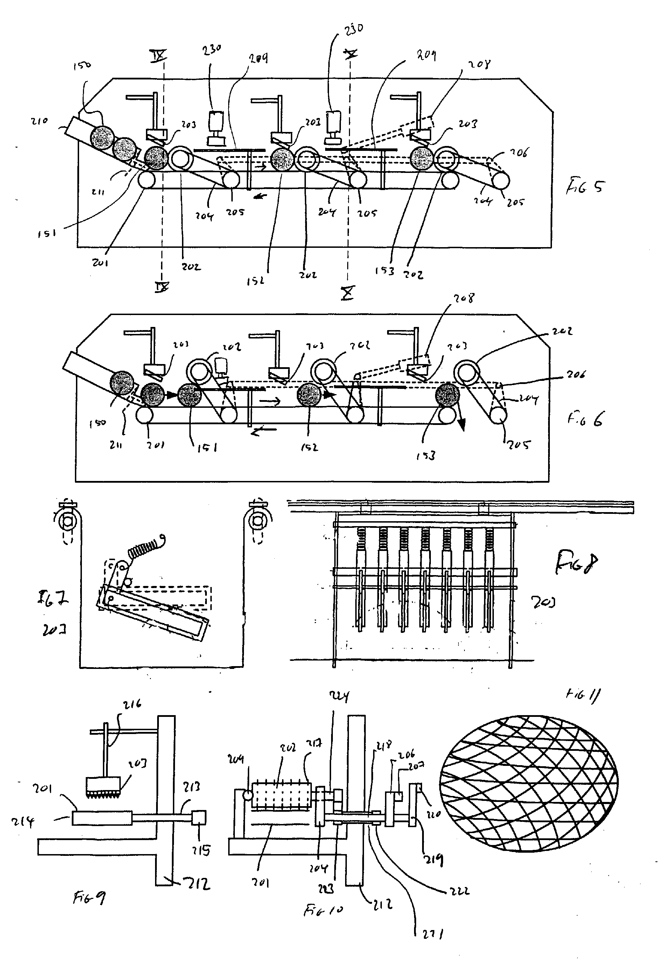

Figures 7 and 8 show sketch views of the cutter sets 203. They are exactly as shown and described in WO01/50891 and will not be described further..

Figure 9 is a schematic cross section through the apparatus of figure 5 along the line IX-IX-IX. The frame 212 of the cutter can be seen. The frame comprises a vertical member and a horizontal member. Through the vertical member of the frame 212 there extends a shaft 213 of the belt roller 214. A drive pulley 215 is shown for rotation by drive means (not shown). The cutter set 203 depends above the belt 201 in a position in which it will cut scores through the peel and into the albedo portion of a citrus fruit resting on the belt 201. The position of the cutter set 203 is variable in vertical direction by adjusting the position of the vertical support 216.

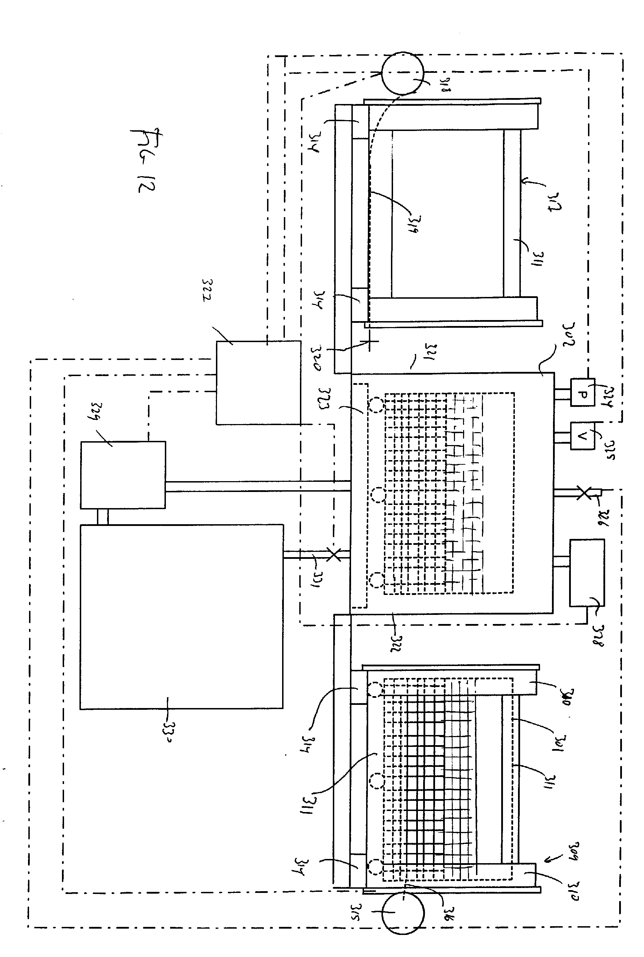

Figure 10 is a schematic cross sectional view through the line X-X in figure 5. It shows the belt 201 and the roller 202 extending above the belt 201. A plurality of pegs 217 are formed on the surface of the roller for enhancing the engagement between the roller and the citrus fruit. The roller 202 is supported on an arm 204. The arm 204 is itself rotatably mounted on a shaft 218 which extends through the vertical part of the frame 212 and connects to a crank 206. The crank 206 is connected by the connecting rod 207 to the cranks of the other two rollers. Further, there is a crank 219 which is connected by a shaft 220 to the cylinder 208 (not shown) whereby the arm may be rotated to lift the roller above the belt 201, the lifting action being transmitted to the cranks 206 of the other two rollers 202 by the connecting rod 207. Finally, coaxial with the shaft 218, there is another rotatably mounted shaft 221. The shaft 221 is rotatable by means 222 connected to rotating means, for example a pulley set, not shown. A further belt and pulley arrangement 223 on the other side of the frame 212 drives the shaft 224 of the roller 202 so that the roller 202 is rotated. Finally, the rail 209 to one side of the belts 201 can be seen, which prevents citrus fruits falling off the side and also rotates the fruits about a vertical axis as they are fed along the belt.

Figure 11 is a schematic view of a citrus fruit which has been scored by the cutter sets 203 of all three cutting stations shown in figure 5. It can be seen that a very large number of intersecting cuts are formed, allowing a high level of penetration of the aqueous solution of enzyme into the citrus fruit.

Figure 12 is schematic illustration of the infuser apparatus for use in the present invention. In this case, fruit is fed in from the right hand side of the top into a cage 301 which is described further in relation to figure 13. The cage comprises a cylindrical drum with an open top, mesh sides 305 and mesh ends 306, to allow penetration of water. Finally, roller wheels 308 are provided to allow the cage to be moved backward and forwards in the direction parallel to its longitudinal axis. In figure 12, the cage 301 is shown rolled into position inside a tilting drum structure 309. The tilting drum structure 309 comprises a pair of annular flanged ends 310 spaced apart by longitudinal frames 311. The tilting drum 309 is shown further in figures 15 and 16. In figure 15, it can be seen in its normal position. A track is defined by track members 312 which is configured to accept the rollers 308 of the cage 301 so that the cage can be slid into and out of the tilting drum 309. A further pair of rollers 313 are provided on either side of the cage drum 309, rotatably engagable with the mesh sides of the cage 301 to support the sides of the cage in the drum.

Referring back to figure 12, the flanged ends 310 are engagable with rollers 314 which can be driven by a motor (not shown) to rotate the tilting drum 309 through about 90°. Figure 16 shows the tilting drum 309 in the rotated position. It can be seen that the cage 301 contained inside the drum is now in a position in which the fruit may be discharged from the cage 301 through the space between the frames 311 of tilting drum 309. Finally, a traction motor 315 is provided which can be used to pull a cable 316 which is attached to the cage 301 as will be described further below.

A second tilting drum which is a mirror image of the tilting drum 309 is provided on the other side of the infuser drum 302. The second tilting drum 317 will not be described in detail, as it is exactly the same in design as the tilting drum 309. However, it should be noted that the tilting drum 317 as illustrated does not have a cage inside it. A cable 319 has been drawn out from the traction motor 318 so that a hook attached to the end the cable 319 is in position in which is it ready to engage the next cage as will be described further below.

The infuser comprises a longitudinally horizontally extending hollow cylindrical pressure vessel manufactured from stainless steel of food grade. The ends 321 and 322 comprise sealable pressure doors which are openable to admit a cage 301 into the pressure vessel 302. A cage 303 is shown in dotted lines inside the pressure vessel. A track 323 is formed in the bottom of the infuser 302 along which the cage rollers 308 of the cage may run. The infuser 302 is provided with a pressure senser 324 for measuring and displaying the pressure above atmospheric pressure in the infuser 302. A vacuum sensor 325 is provided for measuring the pressure below atmospheric pressure in the infuser 302. Separate devices for measuring pressure above and below atmospheric pressure are provided because of the very wide range of pressures employed in the infuser. It is generally difficult to obtain a single pressure measuring device which can be accurately used across the whole range of pressures employed.. The pressure sensers 324 and 325 are connected to a central processor 327 for giving signals indicating the pressure within the infuser 302. There is a vacuum release valve 326. The vacuum release valve 326 comprises a remotely operable valve which is controllable by the central processor 327. A vacuum pump 328 is provided, operable by control signals received from the central processor 327, for evacuating the space inside the infuser 302. A pressurising device 329 is provided for pumping water at pressure into the infuser 302. The pump 329 is controllable by signals from the central processor 327. The water is supplied by water tank 330. The water tank 330 preferably comprises means (not shown) for introducing enzymes in solution to the water which is to be pumped into the infuser 302. A pressurised water return valve 331 is provided, controllable by signals from the central processor 327 to allow water under pressure to be released from the infuser and returned either by gravity or by a pump to the tank 330.

The operation of the infuser shown in figure 12 will now be described.

Firstly, slit citrus fruits from the cutter shown in figure 5 are fed into the cage 301 on the right hand side of the figure, through the open top. This is continued until the cage is substantially full. Then, the doors 321 and 322 of the pressure vessel are opened and the cable 319 from the traction motor 318 is extended through the pressure vessel so that the hook 320 is engaged with the cage 301. The motor 318 is then used to the draw the cage 301 through the open door 322 into the infuser 302. It should be noted there is a small gap between track 323 and the track of the tilting drum 309. However, this gap is much smaller than the length of the cage 301 so that the cage does not tilt into the gap during delivery. Once the cage 301 is in position inside the infuser, the hook 320 is disconnected and the doors of the infuser 321 and 322 are returned to a closed, sealed position. Next, the pump 329 is used to pump water into the infuser 302 so that it substantially covers the fruit in the cage 301 but does not completely fill the space inside the infuser 302. A certain amount of air is left at the top of the infuser, so that the vacuum pump 328, which is configured to pump air, can operate.

During this period, the pressure relief valve 326 is kept open to allow air displaced by the water to flow out. Subsequently, the pressure release valve 326 is closed. The processor 327 then controls the vacuum pump 328 to reduce the pressure inside the infuser. The pressure is reduced until the vacuum sensor 325 indicates that pressure has reached a pressure in the range 0.5 - 0.6 bar below atmospheric. The pressure inside the infuser is maintained at this level for a period of about 30 seconds after which the processor 327 operates the vacuum pump 328 to pump the vacuum down to the pressure in the range 0.9 - 1.0 bar below atmospheric pressure. The fruit in the infuser is maintained at this pressure for approximately 1 minute. The processor 327 then operates the vacuum release valve 327 to release the vacuum slowly over a period of approximately 30 seconds.

Then, the pressure relief valve 326 is opened and the pump 329 is used to pump more water into the infuser 302, substantially filling the infuser and driving any remaining air out through the pressure relief valve 326. The pressure relief valve 326 is then closed again and water under pressure is pumped into the vessel until the pressure sensor 324 measures a pressure in the range 45 bar. The fruit in the vessel is retained in the water under pressure for of period about 10 seconds, after which the central processor 327 operates the valve 331 to return the water from the infuser 302 to the tank 330. The relief valve 326 is opened to allow air to replace the water being pumped out of the infuser 302. During this operation, air in the air sacs in the albedo portions of the citrus fruit is removed and replaced with dilute aqueous solution of enzyme which begins to soften and hydrolyse the albedo. During this operation, the weight of the fruit may increase by 30%. When all of the water has been removed from the infuser, the door 321 is opened and the hook 320 engaged with the cage 301 to draw it into the tilting drum 317. Any remaining water in the fruit will drain out during this operation. Then rollers 314 are operated to rotate the drum substantially through a quarter rotation to the position shown in figure 16 so that the infused citrus fruit are poured out through the open top into a hopper (not shown).

The fruit thus treated is then passed to the peeler which is described further with relation to figure 17. Figure 17 is a schematic side view of a peeler according to the invention. Citrus fruit are fed into the peeler at the top left hand corner of figure 17 and are fed out, when finished, to the bottom right hand corner. The peeler 500 comprises a frame 501 on which there are mounted, in succession, a first feed chute 502, a first peeling means 503, a second feed chute 504, a second peeling means 505, a third feed chute 506 and a third peeling means 507.

The first and second feed chutes 502, 504 each comprise a short channel dimensioned to receive citrus fruit stacked in a line, one at a time. At the end of the chute there is a feed paddle 508, which comprises four blades mounted at equal spaces around an axle. The axle is horizontally mounted with the blades extending through a slot in the bottom of the chute 502, 504. Upon making a single quarter turn, a single citrus fruit is allowed to pass the paddle 508.

Each peeling station comprises a peeling ring 509 which is located in a position to receive a citrus fruit fed by the paddle 508 or chute 506. The peeling rings 509 are represented as being elliptical in figure 17, being viewed in perspective. Figure 18 shows a plan view of a peeling ring 509. The ring 509 comprises an annular ring formed out of sheet silicone rubber material of thickness 3mm. The central opening 510 is dimensioned to be slightly smaller than the external dimensions of the fruit portion of citrus fruit. Because the fruit fed into the apparatus will have been graded first of all so that their size fall within a small range, it is possible to select a central aperture of size which allows the albedo and peel portions of the fruit to be stripped from the fruit portion without unnecessarily compressing and damaging the fruit portion. Preferably, the apertures 509 of the successive peeling rings become slightly smaller in succession.

In order to provide added flexibility to the peeling ring, it may be pierced at regular intervals by holes 511 extending through the sheet material. The holes are suitably of radius 3mm.

In use, the diameter of the aperture 510 will be selected according to the size range of citrus fruit being processed. In order to process citrus fruit of a different diameter, a second peeler (not shown) may operate in parallel to the peeler 500 to figure 17.

In use, once a citrus fruit is fed into the ring 509, it is pressed through the ring by a plunger 512 operated by a pneumatic cylinder 513. The pneumatic cylinder is operated to first of all push the fruit through the ring and then retract to a position which will allow a second citrus fruit to be fed to the peeling ring 509. As a result of stripping the albedo and peel portion from the fruit portion, the peeled material may remain on the peeling ring 509. To remove such material, a plurality air or water jets 514 are provided located around a substantial part of the periphery of the peeling ring. On one side of the peeling ring 509, there is a chute 515 for accepting peeled material. The chute 515 may lead to a collector (not shown). A vacuum means may be provided for drawing peeled material along the chute 515. Once a citrus has been pushed through the ring, before the piston is retracted, the jets are switched on so that any peeled material is blown into the chute 515 thereby clearing the ring. While the jets are on, the piston is retracted. In this way, any material adhering to into the piston is also removed.

The cycle is shown in greater detail in figure 19. In step S501, the feeder is rotated through a quarter turn to feed one fruit. In S502, the fruit is driven through the peeler ring by the piston 512. In step S503, the jet is switched on to remove peeled material. In step S504, the piston is retracted. Finally, in step S505 the jet is switched off and the cycle returns to the beginning.

The first two peeling stations 503 and 505 are substantially identical. The last peeling 507 is slightly different in that it is arranged so that the piston 512 travels in a substantially horizontal direction. A final collection chute for the peeled citrus 516 is provided at the bottom right hand corner of the figure 17.

After peeling, the fruit is segmented. The segmenting operation comprises a first step in which the fruit is cooled in a chiller which is operated for example by solid carbon dioxide or liquid nitrogen. As a result of the chilling operation, the surface of the fruit is chilled to a temperature of - 2°C and the interior of the fruit reaches a temperature around 2°C. Any conventional form of a chiller may be used. After chilling, the fruit is passed to a segmenting apparatus 602 which is shown in figure 20. The fruit is fed into the segmenter from the top right hand side and passes from right to left through the apparatus. A feed chute and feeder 603 is provided which is the same in design and operation as the chute and feeder 502 and 508 of figure 17.

The segmenting apparatus comprises a continually travelling belt 604, the top run of which travels from right to left. It has a surface treated, for example by roughening, to improve frictional grip with the citrus fruits 605. Above the belt 604 there is a contoured pressure bar 606. The underside of the bar is contoured with a concave surface, which defines a channel for guiding the fruit. At the right hand end of the pressure bar, the space between the pressure bar and the top of the belt is greater than the size of the citrus fruit. The pressure bar is inclined so that at its left hand end, the distance between the belt and the pressure bar is much smaller than the average size of the citrus fruit being fed. In this way, as the fruit is fed along by the belt 604, it is progressively compressed. The bottom surface of the pressure bar 607 is treated with a frictional material to ensure that the fruit 605 are rotated as they are fed. Further, a piston 608 is provided for cyclically oscillating the pressure bar 606 about a pivot 609. In this way, the citrus fruits are submitted to varying pressure as they are rotated and fed from right to left. The frequency of oscillation is suitably around about 1 Hz. For different sizes of fruit, the position of the pivot 609 may be raised and lowered by the apparatus 610.

As a result of passing the fruit through the segmenter 602, the fruit may be progressively pummelled and rolled, leading to a partial or complete separation of the segments. Final preparation of the segments may be achieve by hand, if necessary.

Returning to figure 4, fruit segments are subsequently passed to the finishing operation. In the finishing operation, the fruit segments are first of all treated in an acid bath, to dissolve any remaining albedo material which adheres to the fruit segments and to deactivate any enzyme which remains in the fruit segments. A feed arrangement which allows the fruit to be collected from the acid bath, drained and then fed to the next stage 711 is provided. Suitable arrangements are well known in the art and it will not be described further. After passing through the acid bath, the fruit is fed to an alkali bath 720 filled with dilute alkaline solution for neutralising any remaining acid appearing to the surface of the fruit segments.

The acid bath suitably comprises dilute citric acid and dilute hydrochloric acid. A suitable bath may be provided by a mixture in proportions 100ml to 200ml of cold water to 1 gm of citric acid crystals E(330): 5ml of dilute hydrochloric acid (E507). The pH of the solution is preferably 0.88 but can be as high as 0.91. The bath may be at elevated temperature. A heater may be provided to maintain the bath at 30-60°C.

The alkali bath 720 comprises sodium hydroxide (1%). The alkali solution may be prepared by mixing in the proportion 1 gm sodium hydroxide crystals E(524): 100ml of water. The alkali bath may also be maintained at a raised temperature in the range 30°C-60°C. A draining conveyor 721 is provided to remove the fruit segments from the alkali bath 720 and feed it to a cold water bath for cooling the fruits 722. A third draining conveyor 723 is provided for collecting the fruit segment from the cold water bath and passing them to a rinse 724. A fourth draining conveyor 725 is provided for lifting the fruit segments from the rinsing bath and transferring them to a second chilled water bath 726 maintained at a temperature 0°C - 2°C. A fifth draining conveyor 726 is provided for lifting the fruits segments from the second chilled water bath 726 and passing them beneath air knives 727 for removing excess moisture. The segments then pass on the conveyor 726 below a mister 728 under which the segments are coated with a mist of ascorbic acid 0.5% and citrus oil 0.5% in water, before packing.

The present invention has been described above by way of example only and modifications can be made within the invention. The invention also extends to equivalents of the features described. The invention also consists in any individual features described or implicit herein or shown or implicit in the drawings or any combination of any such features or any generalisation of any such features or combination.

## Claims

1. A method for preparing citrus fruit including the steps of:
a) providing a citrus fruit having a flesh portion, an albedo portion and a peel portion;
b) scoring the peel portion to provide access to the albedo portion without piercing the flesh portion;
c) submerging the fruit in a liquid under a vacuum to extract air from the albedo portion;
d) subjecting the fruit submerged in the liquid to pressure to produce infused fruit, in which the peel portion and the albedo portion are loosened from the fruit portion;
e) removing the peel portion and the albedo portion from the fruit portion to produce peeled fruit,
f) preparing the fruit portion for consumption and storage,
wherein, in the step (c) or step ( d), or both, the liquid comprises an enzyme.

2. A method according to claim 1, wherein the enzyme employed is pectinase.

3. A method according to claim 1 or 2, wherein the liquid employed in step (c) and/or step (d) is an aqueous solution of pectinase.

4. A method according to claim 3, wherein the aqueous solution of pectinase comprises between 0.5 and 2% by weight of pectinase, more preferably 1-1.5% by weight

5. A method according to any preceding claim, wherein, the step (c) of submerging the fruit in a fluid under vacuum comprises submerging the fruit under water in a vacuum in the range 40 to 100 kPa below atmospheric pressure, more preferably 51 to 100 kPa below atmospheric pressure.

6. A method according to any preceding claim, wherein the fruit is submerged under vacuum for a period for a time in the range 10 seconds - 2 minutes, more preferably 30 seconds - 1.5 minutes.

7. A method according to any preceding claim wherein the fruit is submerged in the fluid under a vacuum in the range 40-70, more preferably 40-60 kPa below atmospheric pressure in a first step, and subsequently maintained in the fluid under vacuum under further reduced pressure, preferably in the range 70-100 kPa below atmospheric pressure in a second step.

8. A method according to any preceding claim, wherein the step (c) further includes the step of releasing the vacuum over a period of time in the range 0.3 - 1.0 minutes, more preferably 0.4-0.6 minutes.

9. A method according to any preceding claims, wherein the step (d) of subjecting the fruit submerged in the fluid to pressure comprises subjecting the fruit to a pressure in the range 400 - 20,000 kPa, more preferably about 4,000 kPa.

10. A method according to any preceding claim, wherein the step (f) of preparing the fruit portion for consumption or storage comprises the further step of treating the segments with acid.

11. An apparatus for preparing citrus fruit having a longitudinal axis, a peel portion, an albedo portion containing air sacs and a fruit portion, the apparatus comprising:
cutter means having knife means for cutting through the peel portion and into the albedo portion, and having depth control means, for preventing the blade means of the knife means penetrating the fruit portion, the cutter means having three independent sets of knife means, for cutting three independent sets of latitudinal circumferential cuts through the peel portion into the albedo portion,
a vacuum means for extracting air from the air sacs to form at least partially evacuated air sacs;
pressure means for infusing liquid comprising a solution of enzyme under pressure into the at least partially evacuated air sacs to loosen the peel portion and albedo portion from the fruit portion;
a peeler for peeling the peel and albedo portion from the fruit portion comprising at least one peeling means comprising a structure of resilient material having an aperture passing through the structure, and means for driving the fruit through the aperture;
a segmenter for dividing the fruit portion of a citrus fruit into constituent segments, comprising:
means for rolling and pressing the citrus fruit, the rolling and pressing means being configured to apply a cyclically varying pressure to the citrus fruit.

12. A cutter for cutting into the albedo portion of a citrus fruit, comprising a plurality of cutting means in succession, each cutting means comprising:
first and second movable surfaces movable in opposite directions, for supporting and rotating between them a citrus fruit, an array of cutter knives biassed towards the first and second movable surfaces for cutting a plurality of latitudinal slits through the peel portion to the albedo portion of a citrus fruit, and depth control means for preventing the cutter knives piercing the fruit portion,
the second movable surface being displacable away from the first surface so that a citrus fruit carried on the first movable surface can be released and passed to the next cutting means in succession or out of the cutter.

13. A cutter according to claim 12, wherein, the first movable surface comprises a moving belt for supporting on a horizontal surface thereof, a citrus fruit, the second movable surface comprising a rotatable roller located above the horizontal surface of the belt.

14. A cutter according to claim 13, wherein, the first movable surface for the plurality of cutting means is provided by the same continuously movable belt extending through each of the cutting means, each cutting means comprising a second movable surface in the form of a roller above the belt.

15. A peeler for peeling the peel and albedo portion from the fruit portion of a citrus fruit, comprising at least one peeling means comprising a structure of resilient material having an aperture passing through the structure, and means for driving the fruit through the aperture

16. A peeler according to claim 15, wherein there are a plurality of peeling means in succession, to provide a peeling action in different directions.

17. A peeler according to claim 15 or 16, wherein, the resilient means comprises silicone rubber.

18. A peeler according to claim 17, comprising a silicone rubber sheet.

19. A segmenter for loosening the constituent segments of the fruit portion of a citrus fruit from one another, comprising:
means for rolling and pressing a citrus fruit, the rolling means and pressing means being configured to apply a cyclically varying pressure to the citrus fruit.

20. A method of preparing citrus fruit, substantially as herein described with reference to the accompany drawings.

21. A cutter for cutting into the albedo portion of a citrus fruit, substantially as herein described with reference to figures 5-10 of the accompanying drawings.

22. A peeler for peeling the peel and albedo portion from the fruit portion of a citrus fruit, substantially as herein described with reference to figures 17-19.

23. A segmenter for dividing the fruit portion of a citrus fruit into its constituents segments, substantially as herein described with reference to figure 20 of the accompanying drawings.
